# EUROPEAN PATENT APPLICATION

(11) **EP 1 158 688 A1**
(43) Date of publication of application: **28.11.2001**
(21) Application number: 00304444.3
(22) Date of filing: 25.05.2000
(51) Int. Cl.: H04B 1/707

(54) **Dynamic finger allocation for rake receiver**

(71) Applicant: LUCENT TECHNOLOGIES INC., Murray Hill, New Jersey 07974-0636 (US)
(72) Inventor: Freiberg, Lorenz Fred, Swindon, Wiltshire SN 5 8ZR (GB); Lin, Jie, Swindon, Wiltshire SN5 6PP (GB); Reader, David Jonathan, Redland, Bristol B56 6QB (GB); Sabel, Lesley Phillip, Swindon, Wiltshire SN1 3AE (GB)
(74) Representative: Williams, David John

(57) **Abstract**

There is disclosed a method of de-spreading signals in a spread-spectrum communication system, comprising: providing a bank of rake fingers; and dynamically allocating at least one of the bank of rake fingers to de-spread a received signal. The number of rake fingers dynamically allocated is determined by the number of multi-paths associated with the received signal. A plurality of signals are received in different channels, wherein at least one of the bank of rake fingers is allocated to de-spread each received signal.

## Description

### Filed of the Invention

The present invention relates to spread-spectrum communication systems, and particularly to a technique for de-spreading signals in such systems.

### Background to the Invention

The rake receiver is unique to code division multiple access (CDMA). In CDMA each user is assigned a unique spreading code with minimal cross-correlation with respect to other codes as well as minimal auto-correlation with respect to time-shifted versions of itself. Consequently a separate rake finger or correlator can be assigned to each multi-path component resulting from transmission in a time dispersive channel. Assigning individual rake fingers to different shifts in time for a single received signal is known as micro-diversity. The fingers of a rake receiver may also be assigned to separate diversity channels as in the case of more than one antenna at the receiver. The rake receiver then combines multi-path components from more than one independently fading channel.

To extend this concept one step further, the two diversity antennas may be located in entirely different sectors. In such a scenario, the two diversity channels experience independent fast-fading: shadowing and propagation loss are independent. This type of diversity is referred to as macro-diversity. Soft hand-over between sectors is achieved through macro-diversity.

In the up-link, each transmitter has a unique long code to reduce the interference among different mobiles at the base station receiver handling the same call. Channelisation codes are also used, but only to distinguish separate multi-code channels used by a single mobile.

From the perspective of the receiver, during micro-diversity a rake receiver is able to use the same code in all correlator fingers. However, the signal is received over a set of sectors in one or several cells. Two different cells must use two different rake receivers to process the two diversity signals.

It is therefore an object of the present invention to provide a technique in which an efficient an efficient implementation of resources in a rake receiver is provided.

### Summary of the Invention

According to one aspect of the present invention there is provided a method of de-spreading signals in a spread-spectrum communication system, comprising: providing a bank of rake fingers; and dynamically allocating at least one of the bank of rake fingers to de-spread a received signal.

The number of rake fingers dynamically allocated may be determined by the number of multi-paths associated with the received signal.

A plurality of signals may be received in different channels, wherein at least one of the bank of rake fingers is allocated to de-spread each received signal.

The number of rake fingers dynamically allocated for each received signal may be determined by the number of multi-paths associated with each respective received signal.

The demodulated received signals may be routed for further processing associated with a particular transmitter.

Spread-spectrum signals may be received in a plurality of channels, the method further comprising the step of routing the de-spread received signal in each channel for further processing.

According to another aspect of the present invention there is provided a receiver in a spread-spectrum communication system comprising: a bank of rake fingers; and control means for dynamically allocating at least one of the bank of rake fingers to de-spread a received signal.

The control means may allocate rake fingers dynamically in accordance with the number of multi-paths associated with the received signal.

The receiver may include input means for receiving a plurality of signals in different channels, wherein at least one of the bank of rake fingers is allocated to de-spread each received signal.

The number of rake fingers dynamically allocated for each received signal may be determined by the control means in dependence on the number of multi-paths associated with each received signal.

The invention will now be described by way of example with reference to the accompanying drawings in which:-

### Brief Description of the Figures

Figures 1(a) and 1(b) illustrate examples of scenarios in which the present invention may be implemented;
Figure 2 illustrates a prior art implementation of a distribution bus in a spread-spectrum mobile communication system;
Figure 3 illustrates schematically an implementation according to the present invention of dynamic finger allocation in a rake receiver;
Figures 4(a) and 4(b) illustrate an example implementation of the router/combiner of Figure 3;
Figure 5 illustrates schematically an implementation according to a preferred embodiment of a distribution bus in a spread-spectrum mobile communication system;
Figures 6 illustrates an example implementation of the distribution bus of Figure 5; and
Figure 7 illustrates an alternative example implementation of the distribution bus of Figure 5.

### Description of Preferred Embodiment

The invention will be described by way of example with reference to a particular advantageous implementation. It will be understood that the invention is not limited to such an implementation, and may have applicability beyond the example given herein. Where appropriate modifications to, or alternative applications for, the invention are discussed herein. Similarly the invention is not limited to the specific dimensions of the system set forth in the example implementations.

The invention is described herein by way of example with specific reference to a spread-spectrum mobile communications system employing rake receivers for de-spreading in the receiver. The invention is particularly described by way of reference to a macro-diversity system in the up-link transmission from mobile station(s) to base station.

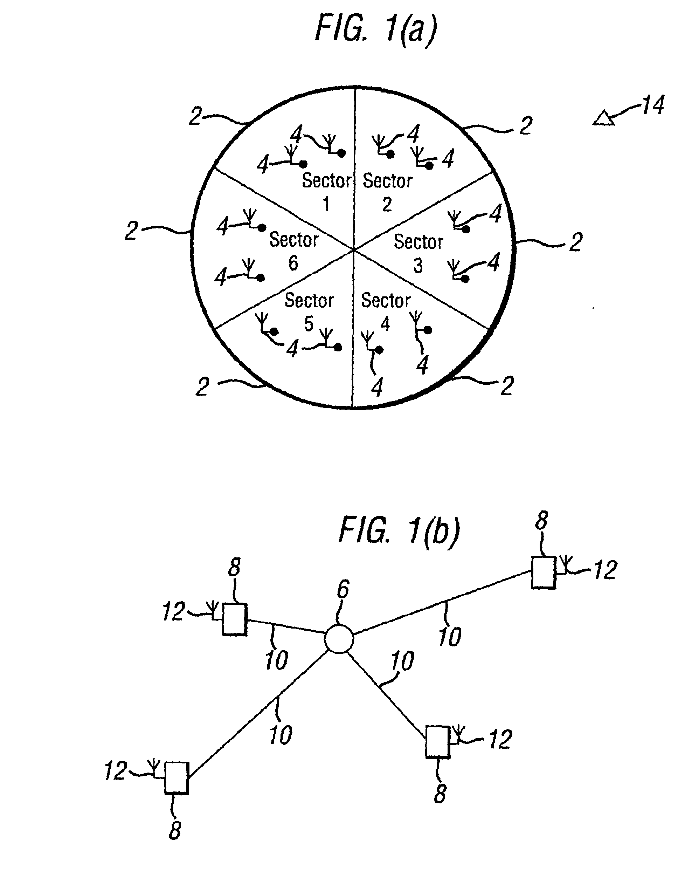

Referring to Figures 1(a) and 1(b) there are illustrated two example scenarios in which the invention may be advantageously utilised.

Figure 1(a) illustrates a macro-cell, generally designated by reference numeral 14, split into a six sector micro-cellular structure. Each of the six sectors is designated by a reference numeral 2. Each sector 2 has two antennas designated by reference numeral 4. In this environment it is assumed that each of the twelve antennas 4 is a directional antenna mounted on or near a common base station. The information received on each of the twelve antennas is therefore processed in the common base station.

On the assumption there is only one possible carrier frequency, there are 12 channels in this system (6 sectors x 2 antennas per sector x 1 carrier frequency).

Referring to Figure 1(b) there is illustrated a second scenario in which the present invention may be advantageously utilised. In this scenario in a distributed single cell a base station 6 is connected via connections 10 to a plurality of base transceiver stations 8, each having at least one antenna 12. The base transceiver station processes the signals received in each of the base stations 8. In the example of Figure 1(b) each of the base stations 8 may be spaced from the base transceiver station 6 by a distance of anywhere up to several km.

It will be understood by one skilled in the art that the example scenarios illustrated in Figures 1(a) and 1(b) are not mutually exclusive, and other scenarios may reflect a combination of the two. Still further, the present invention may be extended to scenarios other than those specifically discussed herein, and the skilled person will recognise the general applicability of the invention.

The invention is described hereinbelow with reference to the example scenario of Figure 1(a). Although in the following description the scenario is described with reference to particular numbers (e.g. six sectors, two antennas per sector, one carrier frequency) it will be appreciated that these numbers are referred to for illustrative purposes only, and the invention is not limited to such numbers.

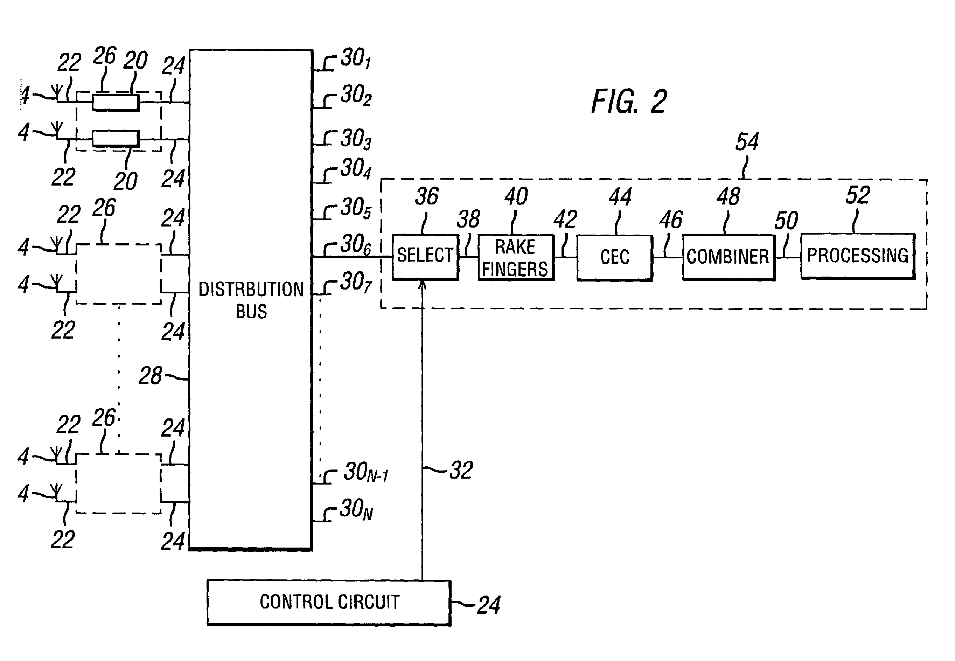

In order to understand the invention, a description is first given hereinbelow of a prior art arrangement. Referring to Figure 2, there is illustrated one known arrangement for the implementation of a receiver in a base station such as that which supports the structure of Figure 1(a).

The signal detected at each antenna 4 is provided on a signal line 22 to the front-end processing circuitry 20 in the particular sector 26 associated with the respective antenna. The front-end processing circuitry 20 provides on signal lines 24 the respective front-end processed received signal. Thus, in the present example, twelve signals, corresponding to the twelve channels of the scenario of Figure 1(a), are presented on the twelve signal lines 24 to the distribution bus generally designated by reference numeral 28. N signal lines 30 on the right hand side of the distribution bus 28 can be considered to be the outputs of the distribution bus 28. Each of the N signal lines 30 carry information for one of the N users of the system. The system users are callers, and may be more generally referred to as transmitters.

Each of the N transmitters or callers is associated with one of N transmitter decoding blocks, generally designated by numeral 54 in Figure 2. Only one of the N transmitter decoding blocks 54 is shown in Figure 2 for reasons of clarity. The transmitter decoding block is connected to one of the N outputs 30₁ to 30_{N} of the distribution bus. It will be appreciated that all the other N outputs 30 of the distribution bus will be connected to a respective transmitter decoding block 54.

Each transmitter decoding block 54 extracts, at a given instant in time, from the one of the N signal lines 30 to which it is connected information associated with one of the N users.

The distribution bus 28 presents on each of the N outputs 30 the twelve signals present on lines 24 at the input of the distribution bus. Thus, in this example, each of the outputs 30 of the distribution bus contains information from the twelve signal lines.

The twelve signal lines on line 30 are presented to the select block 36 of the transmitter decoding block 54. Each of the transmitter decoding blocks 54 is associated with a particular one of the N users. The control circuit 24 controls each of the N select blocks 36 to ensure that the signals on the lines 30 associated with a particular transmitter or caller are selected. The particular signals on the lines 30 selected are those associated with the call which the block 54 is currently processing. The selected signals are presented on the output of the select block on line 38. The base station controls the operation of the control circuit 24 such that the transmitter decoding block 54 processes the signals which are the strongest on the corresponding line 30.

The signals on line 30 associated with the particular user are thus output on lines 38 at the output of the select block 36.

The signals on line 40 are then presented to a block of rake fingers 40. The number of rake fingers provided in the block of rake fingers will vary according to the requirements of the implementation, and for the purposes of this example there are assumed to be eight fingers in the rake finger block 40.

The outputs of the rake finger block, in this example eight signals, are provided on lines 42 to the CEC block 44, which has a number of CECs corresponding to the number of rake fingers. In this example, the eight outputs of the CEC block 44 are presented on lines 46 to the combiner 48.

The combiner combines the elements or multi-paths associated with the particular transmitter or caller being decoded in the transmitter decoding block 54, and presents a single output representing the recovered transmitted signal on line 50. The signal on line 50 is then presented to the processing block 52 for further standard processing in accordance with the art. The processing block 52 performs other processing associated with decoding in higher layers.

It should be noted that in the arrangement of Figure 2 there will be provided some searching and acquisition means for tracking the initial received signal, and information obtained form such tracking is utilised by the de-spreading circuitry of Figure 2. Such searching and acquisition means is not shown in Figure 2 as it is outside the scope of the present invention, and its implementation is well-known in the art.

The arrangement of Figure 2 requires the provision of a large number of rake fingers. As discussed hereinabove each block 40 includes a plurality of rake fingers, the number of which is fixed. Thus in implementing the arrangement of Figure 2 the designer needs to allocated a number of rake fingers based on an estimate of the demand during operation. In the example above it is mentioned that each block 40 includes 8 rake fingers. However at times only two or four of these fingers may be utilised, and at times it may be preferable for a greater number of fingers, e.g. sixteen to be provided.

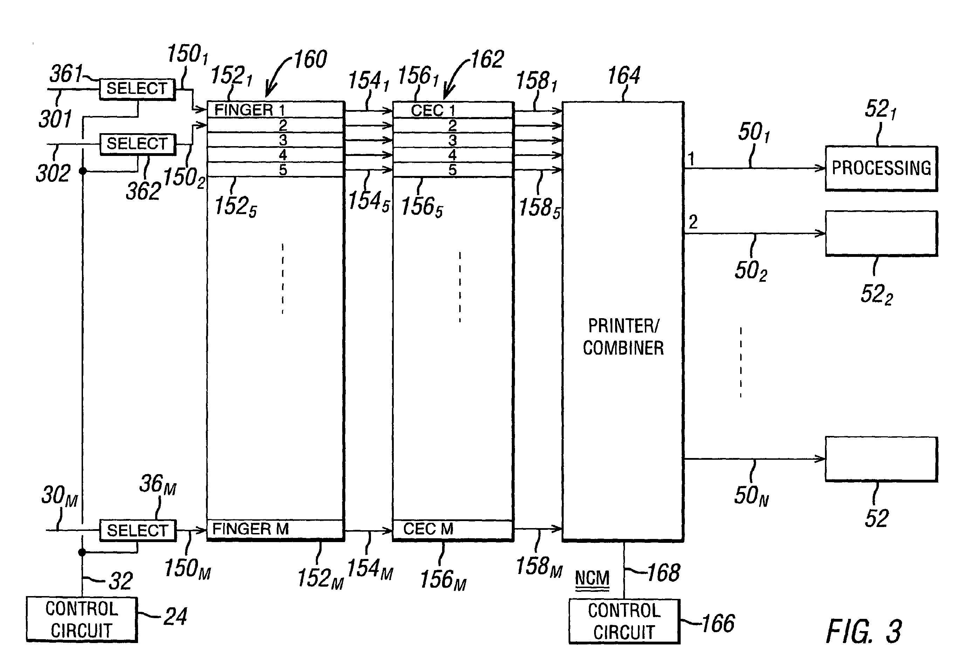

In accordance with the present invention Figure 3 illustrates an advantageous implementation of a rake finger arrangement in a spread spectrum system which optimises system performance. In Figure 3 like reference numerals are used to illustrate elements which correspond to those shown in Figure 2. It is assumed that the elements on the left hand side of the distribution bus 28 in Figure 3 are the same as in Figure 2.

In the arrangement of Figure 3, the distribution bus has M outputs 30₁ to 30_{M}. Each of the M output lines 30 of the distribution bus 28 is connected to form an input to one on M select blocks 36₁ to 36_{M}. The Me select blocks are controlled by control circuit 24 via lines 32.The M select blocks 36₁ to 36_{M} each generate an output on a respective output line 150₁ to 150_{M}.

Each of the select blocks 36₁ to 36_{M}, and consequently each of the outputs 150₁ to 150_{M}, is provides an input to a respective rake finger 152₁ t edesignated by reference numeral 160. The bank of rake fingers 160 replace, in accordance with the present invention, the N blocks of rake fingers 40 shown in Figure 2.

Each rake finger 152₁ to 152_{M} provides an output on a respective line 154₁ to 154_{M} to a corresponding channel estimation and correction (CEC) unit 156₁ to 156_{M}. The CEC units 156₁ to 156_{M} comprise a CEC block generally designated by reference numeral 162. Each CEC unit 156₁ to 156_{M} generates an output on a respective line 158₁ to 158_{M} to a router/combiner 164.

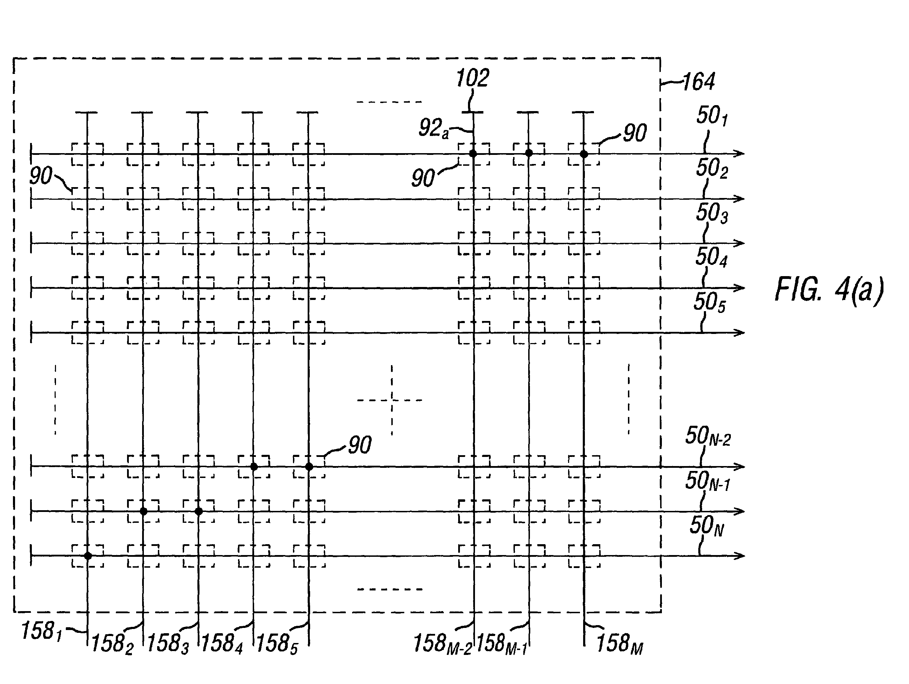

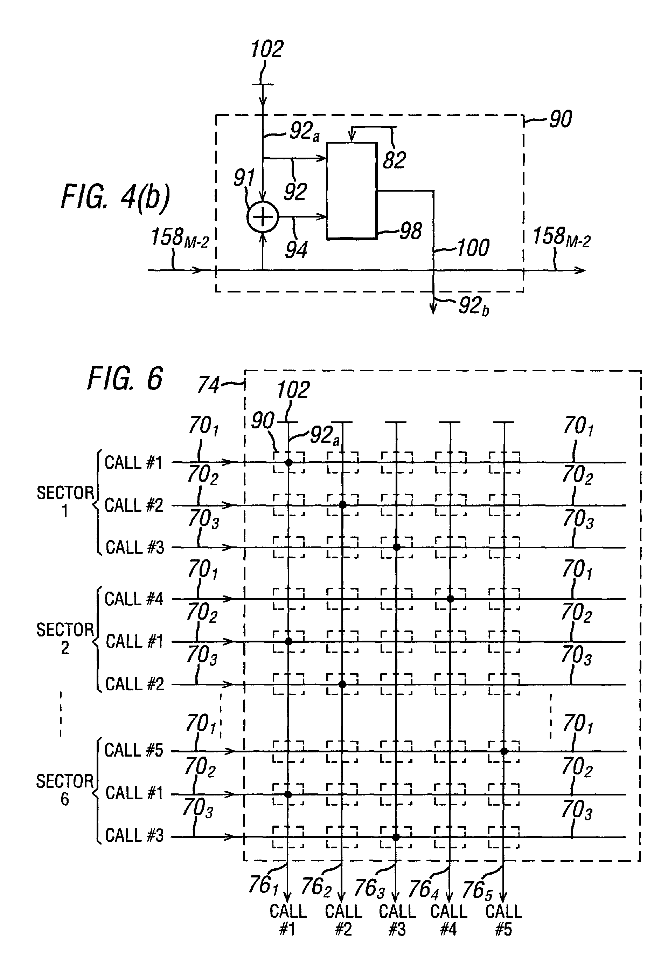

The router/combiner is controlled by a control circuit 166 via control lines 168 to provide output signals on a K plurality of output lines 50₁ to 50_{K}. The operation of the router/combiner will be described further hereinbelow with reference to Figure 4. The outputs from the router/combiner on lines 50₁ to 50_{N} form inputs to a respective processing block 52₁ to 52_{N} for further processing in the receiver.

In accordance with the invention, each select block 36₁ to 36_{M} is controlled by the control circuit 24 to select the appropriate source (i.e. channel) from the distribution bus 28. The same source can be used by any number of fingers in the bank of fingers 160. Thus the processing for a particular call or transmitter may use, for example, fingers 3,6,11,15,17 from the bank of fingers 160.

The allocation of fingers in the bank 160 is, in accordance with the present invention, dynamic. Any number of fingers can be added to improve performance, assuming that there are additional fingers in the bank 160 available. Thus the dimensioning is on a statistical basis where the bigger the pool the lower the probability of blocking (i.e. not getting a finger when requesting it) for a given finger request. The principle advantage is that, as the number of fingers used may a call can vary, the pool of fingers in the bank 160 can be dimensioned to have the average for the maximum number of calls. Generally the number of fingers required for each call will vary from between two and ten, with an average of four. In practice, the dimensioning of the bank of rake fingers 160 will allow will provide access to many more rake fingers than the average. This ensures that the inventive arrangement provides either performance improvement (e.g. over four fingers statically assigned) or a reduced resource relative to the dynamic average number of fingers. The bigger the pool, the more efficient the method.

The dimension N is the number of calls that the system is dimensioned to receive. The dimension M is the total number of fingers provided in the system of Figure 3. Hence in the prior art arrangement of Figure 2, on the assumption that 8 fingers are provided for each call, there are 8N fingers provided. In the inventive arrangement of Figure 3 the number of fingers provided is such that M<8N. In a typical implementation, M=4N. That is, half the number of fingers compared to the prior art method. Even with this reduced number of fingers, the arrangement of Figure 3 still provides improved performance (at lower loads than the maximum in particular). As the number of calls increases to the maximum (N), then the probability of getting extra fingers greater than the average allowed (e.g. 4) will reduce. The exact nature of this probability is a function of factors such as the channel type, vehicle speed and the environment.

Referring to Figures 4(a) and 4(b) there is shown a possible implementation of the router/combiner 164 of Figure 3. As illustrated in Figure 4(a) each of the signal outputs for each of the CEC units on lines 158 crosses with a signal output for a particular call on the lines 50 in a connector unit generally designated by reference numeral 90.

In this simplified example, connections which are made from the signal outputs of each CEC unit 156₁ to 156_{M} on lines 158₁ to 158_{M} to the signal output for a particular transmitter or caller on lines 50₁ to 50_{N} are represented by a solid circle in each box 90. Thus signals output from the various CEC units are provided as outputs associated with the appropriate caller.

Although in Figure 4(a), and in Figure 3, it is shown that there is a distinct physical line 50 associated with each individual caller, there may in fact be a reduced number of physical lines fewer in number than the actual number of callers supported by the system. The signals for each caller may then be time multiplexed onto such lines. Thus in the simplified example of Figure 4(a) the lines 50₁ to 50_{N} may be replaced by a fewer number of lines, and the information associated with the respective calls time multiplexed onto such lines.

Figure 4(b) shows in some more detail an example implementation of the connector unit 90 for implementing the distribution bus according to the present invention. In practice, the implementation of the bus shown in Figure 4(a) will be well within the scope of a skilled person.

Each connector unit 90 includes a summer 91 and a multiplexor 98. The operation of the connector unit 90 will be described with reference to a specific connector unit at the junction of the line 158_{M-2} with the line 50₁. The connector unit 90 receives as one input a signal on line 92a, which is the output of the connector unit directly vertically above it in the distribution bus. As the connector unit 90 is the first such unit, then this input is connected to a termination point 102. The connector unit 90 receives as a second input the signal on line 158_{M-2}. The signals on lines 92a and 158_{M-2} are added together in summer 91, and presented on line 94 to the multiplexor 98. The output of the multiplexor on line 100 forms the input on line 92b to the next vertically lower connection unit in the distribution bus.

In the next vertically lower connection unit no connection is to be made, and the input signal on line 92b will be passed through the multiplexor directly onto the line 100. Control of the multiplexor 98 is via a control signal on line 168 generated by the control circuit 166. The control circuit 166 determines whether the input signal on line 92a is added to the signal on line 158_{M-2}, or whether it is merely passed straight to the output.

It will also be appreciated that the respective connector units 90 will be clocked so as signals are presented on the output lines 50 with appropriate timing.

It should be noted that in the arrangement of Figure 2 there will be provided some acquisition and searching means for determining which signals are to be selected for a call and a tracking means to allow the processing in the processing unit 54 to be optimised. Such acquisition and searching means are not shown in Figure 2 as they are outside the scope of the present invention, and their implementation is well-known in the art.

The advantage of this arrangement is that it pools resources to ensure minimum blocking probability.

A significant disadvantage of the arrangement of the distribution bus as shown in Figure 2 is the need for a large distribution bus. The entire sampled baseband signal, in this example 12 sector antennas must be placed on this distribution bus 28. In previous systems it was possible to distribute the analogue baseband signal. However, with 12 sector antennas, it is impossible to make the 12 analogue signal available for each block 36. Too many cables and combiners are needed. It is therefore necessary for the digital sampled baseband signal to be distributed on the distribution bus 28.

The digital sampled baseband signal has to operate at such high speeds due to the bandwidth of next generation systems, and the number of sector antennas (i.e. signal sources), that the implementation of the distribution bus becomes extremely expensive in terms of signal rotating resources (e.g. back-planes, cables, signal transmission devices).

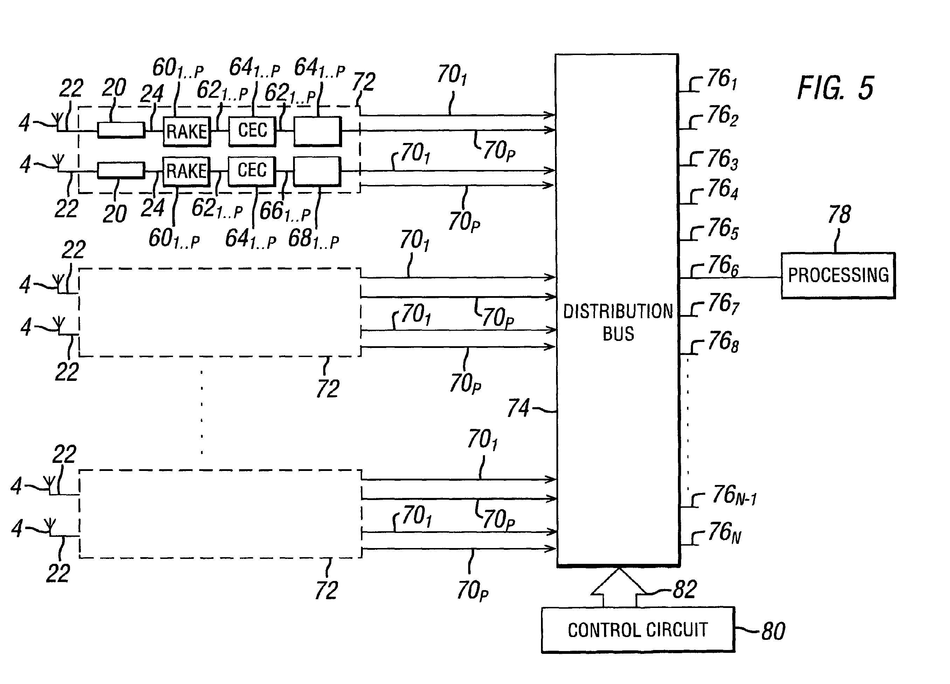

An improvement to the distribution bus arrangement of Figure 2 will now be described with reference to Figure 5 by way of an example implementation for the scenario of Figure 1(a).

Where an element shown in Figure 5 is the same as an element shown in Figure 2, like reference numerals are used.

As described hereinabove with reference to Figure 2, the signal detected at each antenna 4 is provided on a signal line 22 to the front-end processing circuitry 20 in a particular sector. The front end processing circuitry provides on signal line 24 the processed received signal.

Each antenna 4 of a sector receives usable signals from a limited number of callers or transmitters P at any one time, which is less than the total number of transmitters N which can be supported by the whole system at any one time.

In accordance with this preferred embodiment of the invention, the output of each one of the front-end processing circuits 20 is provided to a bank of rake receivers. That is, each signal on line 24 is provided as an input to a bank of P rake receivers, each rake receiver being associated with a particular one of the P users which may be supported by the particular antenna 4. Each rake receiver includes a plurality of rake fingers, and in this example implementation, it is assumed that each rake receiver has eight rake fingers.

Thus a bank of P rake receivers 60₁..60_{P} are associated with each front-end processing circuitry 20. Therefore each sector in this example is provided with 2P rake receivers, and in total in this example the system has 12P rake receivers.

Each of the rake receivers 60₁..60_{P} generates on a respective output line a plurality (in this example eight) of signals 62₁..62_{P} to a bank of P CEC blocks 64₁..64_{P}. Each CEC block generates on a respective output line a plurality (in this example eight) of signals 66₁..66_{P} to a plurality of P combiners 68₁..68_{P}. Each combiner 68₁..68_{P} combines the eight outputs from the respective CEC block to generate an output for a particular user. Thus the P combiners associated with each received signal generate P output signals on lines 70₁..70_{P}.

It should be noted that the functionality of the rake receivers in combination with the functionality of the channel estimation and correction perform demodulation of the received signals. That is the rake receivers de-spread the received signal, but the received signal is demodulated only after the channel estimation and correction step.

Thus there is provided as inputs to the distribution bus 74 a set of P input signals from each channel, where each of the P input signals is associated with each of up to N callers or transmitters.

It should be noted, however, that a further combining step could take place before the signals are input to the distribution bus. The pairs of outputs from the pairs of combiners in each sector could be combined to form a single set of P input signals from each sector rather than 2P input signals. Other improvements along similar lines for other possible system arrangements will be apparent to the skilled person (e.g. modifications for multiple antennas).

The distribution bus operates, under the control of the control circuit 80 via signal lines 82 as will be described further hereinafter, to connect the P input signals from each channel to the appropriate one of the N signal lines 76₁.. 76_{N} associated with each of the N callers on the output of the distribution bus 74. Each of the N signal lines associated with a respective caller forms an input to a respective processing circuitry block 78, which operates in a similar fashion to the processing circuitry 52 of Figure 2 to further process a received call.

The implementation of the distribution bus for distributing the P signals from each channel to the appropriate processing circuitry for each of the N callers may vary.

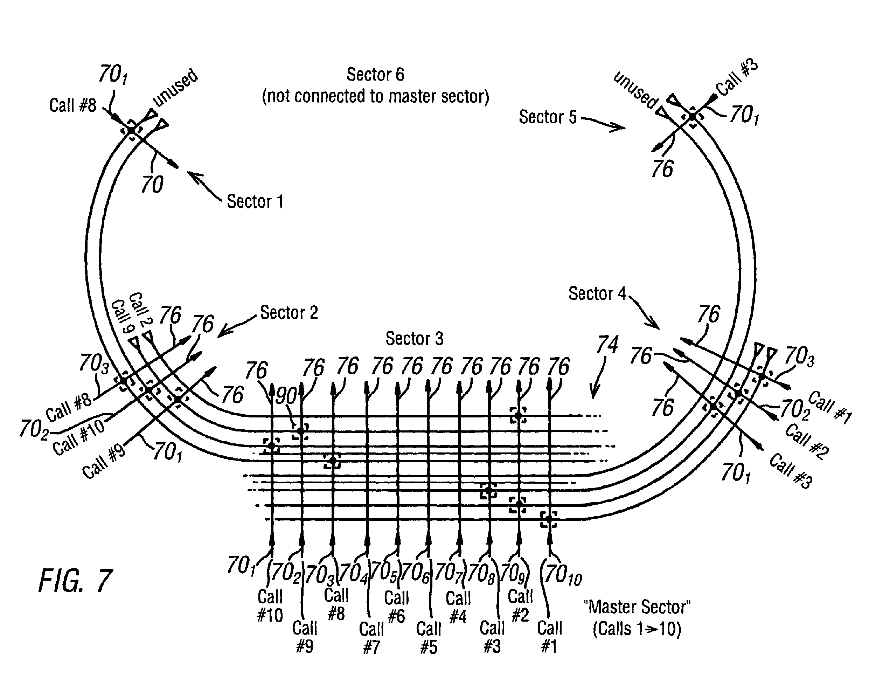

Referring to Figure 6, a first example implementation of such a distribution bus is given. In Figure 6 a much simplified implementation is assumed where there are three channels, each channel being capable of supporting three calls (P=3). In total the system can support five calls (N=5). As illustrated in Figure 6 each of the signal outputs for each of the channels on lines 70 crosses with a signal output for a particular call on line 76 in a connector unit generally designated by reference numeral 90.

In this simplified example, connections which are made from the signal outputs of each channel on lines 70 to the signal output for a particular transmitter or caller on lines 76 are represented by a solid circle in the box 90. Thus signals received in the various channels are provided as outputs associated with the appropriate caller.

The implementation of the connector units 90 in Figure 6 will be similar to that shown in Figure 4(b), and further alternative implementations will be apparent to one skilled in the art.

Although in Figure6, and in Figure 5, it is shown that there is a distinct physical line 76 associated with each individual caller, there may in fact be a reduced number of physical lines fewer in number than the actual number of callers supported by the system. The signals for each caller may then be time multiplexed onto such lines. Thus in the simplified example of Figure 6 the five lines 76₁ to 76₅ may be replaced by a single line, and the information associated with the respective five calls time multiplexed onto such line.

It will also be appreciated, once again, that the respective connector units 90 will be clocked so as signals are presented on the output lines 76 with appropriate timing.

As will be appreciated, in a practical system the number of channels and the number of potential callers is large, and thus in the following an alternative implementation of the distribution bus 74 is provided which seeks to provide an efficient utilisation of bus capacity.

Referring to Figure 7, a second example implementation of a distribution as presented in Figure 5 is given. This example implementation seeks to efficiently implement the distribution bus based on a statistical distribution of the received signals. That is to say, an assumption is made that the signal from a particular transmitter or caller will be strongest in a particular sector, and weaker in others. For instance, referring to the arrangement of Figure 1(a), initial searching and acquisition may detect that the received signal for a particular transmitter or caller is strongest in sector 3. An assumption may then be made that the signal will be weakest, and possibly negligible, in the opposite sector, i.e. sector 6.

Thus on the basis that there are a large number of calls in the system, it is possible to allocate bus capacity on a statistical basis. For example, it may be assumed that 30% of calls will reach those sectors adjacent the sector with the strongest received signal, 10% of calls will reach the next adjacent sector, and 1% will reach the opposite sector. Thus where the strongest signal is detected in sector 3, it is assumed that 30% of that call will reach sectors 2 and 4, 10% will reach sectors 1 and 5, and 1% will reach sector 6.

In all cases the sector which detects the strongest signal strength for a particular caller will become the 'master sector' for that caller. Thus at any one time each sector may be the 'master sector' in respect of a number of callers. The master sector receives all signals associated with calls for which it is master sector, and processes those calls.

Here an example is used to clarify the operation of the implementation. The example assumes 10 calls having the strongest signal in sector 3.

For those 10 calls determined strongest in sector 3, sector 3 therefore becomes the 'master sector'. Signals associated with each of those ten calls detected in other sectors are then fed to sector 3 using the bi-directional bus. On the assumption that 30% of the 10 calls will be detected in sectors 2 and 4, sectors 2 and 4 each provide signals associated with 30% (i.e. three) of the ten calls. Similarly sectors 1 and 5 provide signals associated with 10% (i.e. one) of the ten calls. No signals are provided from sector 6.

In the example of Figure 7, it is assumed that the initial searching and acquisition determines that 10 calls are strongest in sector 3. Of course other signals will be detected as strongest in other sectors, but for the purposes of a simplified illustrative example of the principle of the distribution bus in Figure 7 the details of the bus associated only with sector 3 as 'master sector' are shown.

Thus, in sector 3, signals associated with all ten calls (generally termed call numbers 1 to 10 in this example) are provided on lines 70₁ to 70₁₀. In sector 4 calls associated with call numbers 1, 2 and 3 are detected and provided on lines 70₁ to 70₃. In sector 2 calls associated with call numbers 8, 9 and 10 are detected and provided on lines 70₁ to 70₃. In sector 5 a call associated with call number 3 is detected and provided on line 70₁. In sector 1 a call associated with call number 8 is detected and provided on line 70₁.

The signals associated with calls 1 to 10 and detected in sectors 1,2,4 and 5 are provided to the master sector, sector 3, for processing. In a similar manner to the arrangement shown in Figure 6, each signal line 70 from a sector crosses the bi-directional distribution bus 74, and a connection unit 90 is provided at each such crossing point, which connection unit is controlled by the control circuit 80. Referring to Figure 7, those connection units 90 in which a connection is made are represented by a solid circle in the connection unit.

Thus in this way the signals associated with each of callers 1 to 10 are presented for processing in sector 3.

In order to build up a picture of the complete bus for all calls processed by all sectors at any one time, the drawing of Figure 7 can be repeated for each sector as the 'master sector'. Combining all the master sectors, the result is a bi-directional bus around the entire base transceiver station.

The bus bandwidth between sectors may be limited to less than that in the individual sectors. For example in this example the bi-directional busses connecting sectors may be 20% of the sector bus. This is particularly useful in distributed base station systems where sectors, and their front end signal processing 72, are physically remote from each other (e.g. Figure 1(b)). The separation of the sectors may be from metres to kilometres.

Additional bus lines 74a are shown in sector 3 of Figure 7, these bus lines provide additional bandwidth for routing for local processing in the particular sector.

In an alternative arrangement to that shown in Figure 5, the invention may be implemented with the rake receivers and CEC blocks physically separated from the combining blocks by the distribution bus. That is, referring to Figure 5, the outputs of the CEC blocks 64 are presented to form the inputs to the distribution bus 74, and the combining blocks 68 are included in the circuitry at the output of the distribution bus. Such an arrangement still enables the rake receivers to be implemented at the front end, thereby avoiding the need to transfer the sampled RF signal of all channels to all baseband-processing units.

One disadvantage of transferring symbols only is that the outputs of the rake fingers are potentially very bursty, since the relationship between the rake fingers and the combiners is constantly changing. The sectors that are receiving multi-path signals change as the mobile moves, altering data flow. Another disadvantage is that the busses and rake fingers must be dimensioned to cope with peak traffic instead of average traffic.

When the control of the rake fingers and the combining is separated, a different bus configuration is required to send the appropriate symbol estimates from the rake fingers to the relevant baseband processing unit. The bus must be designed for peak data rates, which data rates may only occur for a small fraction of the time that could be efficiently grouped together in a slot.

It should be noted that in the above examples of Figures 5 to 7 the received signals are processed by the rake receivers and by the channel estimation and correction circuitry in succession on the same side of the bus, such that demodulation is carried out effectively in two successive steps on the same side of the bus. However, in certain implementations it may be possible for the channel estimation and correction to be performed on the right hand side of the distribution with the rake receivers implemented on the left hand side of the distribution bus. However, the implementation described in the examples presented herein is the preferred example.

Thus Figures 5, 6 and 7 illustrate improvements to the distribution bus in the receiver of a spread-spectrum system which improve system performance.

It will be appreciated by the skilled person that the present invention, discussed hereinabove with reference to Figures 3 and 4, may also be introduced into the advantageous arrangements of Figures 5 to 7. Referring, for example, to Figure 5 the two blocks of rake receivers 60 in each sector, each of which includes P rake fingers, may be pooled to provide a single bank of rake fingers which are allocated on demand. A similar number of CEC blocks for each finger in the rake bank would then need to be provided.

That is the advantageous positioning of the distribution bus after demodulation, as shown in relation to various embodiments in Figures 5,6 and 7, may be further improved by the introduction of the dynamic allocation of rake fingers from a common bank of rake fingers as per the present invention.

Further utilisation of the present invention in alternative system environments will be apparent to the skilled person.

## Claims

1. A method of de-spreading signals in a spread-spectrum communication system, comprising: providing a bank of rake fingers; and dynamically allocating at least one of the bank of rake fingers to de-spread a received signal.

2. The method of claim 1 wherein the number of rake fingers dynamically allocated is determined by the number of multi-paths associated with the received signal.

3. The method of claim 1 wherein a plurality of signals are received in different channels, wherein at least one of the bank of rake fingers is allocated to de-spread each received signal.

4. The method of claim 3, wherein the number of rake fingers dynamically allocated for each received signal is determined by the number of multi-paths associated with each respective received signal.

5. The method of any one of claims 1 to 4 wherein the step of de-spreading each received signal is included in a demodulating step.

6. The method of claim 5 wherein the demodulating step further comprises performing the step of channel estimation and correction on the output of each rake finger.

7. The method of claim 5 or claim 6 wherein the demodulated received signals are routed for further processing associated with a particular transmitter.

8. The method of any preceding claim wherein spread-spectrum signals are received in a plurality of channels, the method further comprising the step of routing the de-spread received signal in each channel for further processing.

9. The method of claim 8 wherein the step of routing comprises combining the de-spread received signal in each channel with the de-spread received signals in other channels associated with the same transmitter.

10. The method of claim 8 or claim 9, in which each channel receives spread-spectrum signal asscoiated with a plurality of transmitters, the step of de-spreading including combining those de-spread signals associated with the same transmitter.

11. The method of any preceding claim in which at least a plurality of channels are defined by a multi-sector receiver cell arrangement.

12. The method of claim 8 wherein the routing step comprises routing the de-spread received signals in each channel associated with the same transmitter to a particular sector for further processing.

13. The method of any preceding claim in which the step of de-spreading comprises generating a sampled baseband signal.

14. A receiver in a spread-spectrum communication system comprising: a bank of rake fingers; and control means for dynamically allocating at least one of the bank of rake fingers to de-spread a received signal.

15. The receiver of claim 14 wherein the control means allocates rake fingers dynamically in accordance with the number of multi-paths associated with the received signal.

16. The receiver of claim 14 wherein the receiver includes input means for receiving a plurality of signals in different channels, wherein at least one of the bank of rake fingers is allocated to de-spread each received signal.

17. The receiver of claim 16, wherein the number of rake fingers dynamically allocated for each received signal is determined by the control means in dependence on the number of multi-paths associated with each received signal.

18. The receiver of any one of claims 14 to 17 wherein the bank of rake fingers are included in a demodulating means.

19. The receiver of claim 18 wherein the demodulating means further comprises a channel estimation and correction means associated with each rake finger.

20. The receiver of claim 18 or claim 19 further comprising routing means for routing the demodulated received signals to a processor associated with a particular transmitter.

21. The receiver of any one of claims 14 to 20 further comprising input circuitry for receiving spread-spectrum signals in a plurality of channels; and routing means for routing the de-spread received signal in each channel to further processing circuitry.

22. The spread-spectrum communication system of any one of claims 14 to 21 in which the de-spreading circuitry further includes combining means for combining those de-spread received signals received in the same channel and associated with the same transmitter.

23. The spread-spectrum system of any one of claims 20 to 22 which comprises a multi-sector receiver cell arrangement, wherein further processing circuitry is provided in each sector, the routing means being adapted to route all de-spread received signals associated with the same transmitter to the further processing circuitry in one particular sector.
